# EUROPEAN PATENT SPECIFICATION

(11) **EP 4 083 935 B1**
(45) Date of publication and mention of the grant of the patent: **25.03.2026**
(21) Application number: 21190977.5
(22) Date of filing: 12.08.2021
(51) Int. Cl.: G06V 10/96, G06V 10/25

(54) **DEVICE DATA COLLECTION SYSTEM AND METHOD BASED ON IMAGE RECOGNITION**
VORRICHTUNGSDATENERFASSUNGSSYSTEM UND -VERFAHREN BASIEREND AUF BILDERKENNUNG
SYSTÈME ET PROCÉDÉ DE COLLECTE DE DONNÉES DE DISPOSITIFS BASÉS SUR LA RECONNAISSANCE D'IMAGE

(30) Priority: 30.04.2021 CN 202110487550
(43) Date of publication of application: 02.11.2022
(73) Proprietor: Oriental Bluesky Titanium Technology Co. Ltd, Yantai Hi-tech Industrial Development Zone Yantai Shandong 264000 (CN)
(72) Inventor: QIAN, Yu, Shandong, 264000 (CN); ZHANG, Yan, Shandong, 264000 (CN); SHI, Deze, Shandong, 264000 (CN); SUN, Bin, Shandong, 264000 (CN); ZHAO, Kun, Shandong, 264000 (CN)
(74) Representative: Santarelli

(56) References cited:
- US-A1- 2017 001 308
- US-A1- 2021 103 767

## Description

### Technical Field

The present invention relates to the field of data collection technologies, and in particular, to a device data collection system and method based on image recognition.

### Background Art

With the continuous innovation of information technologies, currently, the device data collection technology has provided a main method for numerous enterprises to implement the Internet of Things in Manufacturing, ameliorate management effects, and improve production efficiency. However, from the perspective of actual enterprise operation, both input and output need to be considered when some conventional production and testing devices are replaced, and there is an obvious conflict between technological improvement and an assured profit. In reformation of conventional device data collection, the following issues usually need to be handled: With the innovation of control system technologies, an original communication interface and communication protocol of a conventional device are outdated, a direct communication conversion with a current mainstream industrial Ethernet interface cannot be performed, and there is no corresponding intermediate conversion component at a physical layer, so that device data collection is difficult to implement or even cannot be implemented; and conventional industrial control devices such as machining lathes and testing devices are usually matched with unique operation monitoring interfaces and displays, to display key data that needs to be monitored in real time, however, because there are different development platforms and versions for background monitoring software and some brands do not provide outward open interfaces out of business secret security, data collection and integration cannot be implemented in the aspect of software, and consequently, key data in a process of device production and operation or testing and verification can only be recorded through manual transcription.

A universal character recognition technology for images is usually used to recognize character content in an image, is extensively applied in the field of post and telecommunications, logistics, and business offices, and has replaced manual input and transcription works to some degree, thereby having implemented a quick conversion from an on-paper form to a data form. By applying image recognition technologies to key data recognition in a monitoring interface of a device, the foregoing problem of data collection in an outmoded device can be solved.

A patent application No. US 2017/001308 A1 discloses methods, systems, and apparatus, including computer programs encoded on a computer storage medium, for automating a manual process. The methods, systems, and apparatus include actions of identifying a process that (i) is manually performed by a user interacting with a computer, and (ii) is to be automated for performance by a robot that is configured to interact with another computer. Additional actions include obtaining one or more images taken of a display of the computer while the user is interacting with the computer in manually performing the process and applying a computer vision technique to identify one or more activities associated with the process. Further actions include, for each of the one or more identified activities, generating activity information associated with the activity and generating a process definition for use in causing the robot to automatically perform the process.

### Summary of the Invention

The invention is defined by the appended claims.

To address the foregoing problem and deficiency of the prior art, the present invention provides a device data collection system based on image recognition.

The technical solution of the present invention for solving the foregoing technical problem is as follows.

The present invention provides a device data collection system based on image recognition, the system comprising an interface module, a task management module, a collection strategy execution module, and a content recognition module, wherein
the interface module is configured to provide a standard service for an external application, and is configured to receive a task parameter delivered by the external application and return result data to the external application;
the task management module is configured to: provide a user with strategies of configuring, debugging, and testing user-defined collection, and be invoked by the interface module to screen out, based on the task parameter obtained by the interface module, a list of tasks to be executed;
the collection strategy execution module performs screen capturing according to the list of tasks, to save a screenshot, locally segments and preprocesses the screenshot to obtain local images, passes the local images to the content recognition module, and transmits result data returned by the content recognition module to the interface module; and
the content recognition module preprocesses the obtained local images, obtains result data by identifying information in the local images by using an image recognition technology, and returns the result data to the collection strategy execution module.

On the basis of the foregoing descriptions, the present invention may further make the following improvements:
Further, the collection strategy execution module comprises a virtual action module, a screen capturing module, and an image processing module, wherein
the virtual action module is invoked by the task management module to perform a corresponding virtual previous action according to a collection strategy screened out by the task management module;
the screen capturing module is invoked by the task management module to perform screen capturing and obtain a screenshot according to the collection strategy screened out by the task management module, and passes a local recognition task and the screenshot to the image processing module; and
the image processing module locally segments and preprocesses, according to the local recognition task passed by the screen capturing module, the screenshot to generate several local images, passes the local images and sequence labels corresponding to the local images to the content recognition module, receives the result data returned by the content recognition module, and feeds back a corresponding array formed according to a sequence of the sequence labels to the interface module.

Preferably, the screen capturing module and the virtual action module are located in a client and exist as background services.

The present invention further provides a device data collection method based on image recognition, the method comprising the following steps:
S1: invoking, by an external application, an interface service published by an interface module;
S2: obtaining, by a task management module, a task parameter, to screen out a list of tasks to be executed, and determining whether a previous action is required, wherein if "yes", step S3 is performed; or if "no", step S4 is performed;
S3: performing, by a virtual action module, the virtual previous action, and passing a screen capturing task to a screen capturing module;
S4: performing, by the screen capturing module, screen capturing on a current screen to save a screenshot, and passing a task and the screenshot to an image processing module;
S5: locally segmenting and preprocessing, by the image processing module based on a screenshot file corresponding to the task passed by the screen capturing module, saving local images, generating sequence labels, and passing the local images and the sequence labels to a content recognition module;
S6: performing, by the content recognition module, recognition and calculation on the images passed by the image processing module to obtain result data, and returning the result data to the image processing module; and
S7: feeding back, to the interface module by the image processing module by using a preset format, the result data returned by the recognition module.

The positive, progressive, and beneficial effects of the present invention are as follows.

The present invention quickly solves the problem of data collection and integration of a conventional device, and implements automatic collection of screen data, thereby avoiding errors in manual transcription; and based on user-defined customer requirements, the system streamlines client applications and satisfies requirements of various screens and in various application scenarios.

### Brief Description of the Drawings

FIG. 1 is a structural block diagram of a device data collection system based on image recognition according to the present invention; and
FIG. 2 is a flowchart of a device data collection method based on image recognition according to the present invention.

### Detailed Description of Embodiments

The following describes the principle and features of the present invention with reference to the accompanying drawings. Examples given are merely used for explaining the present invention, and do not limit the scope of the present invention, which is defined by the appended claims.

An embodiment provides a device data collection system based on image recognition. The system comprises a client and a server. The client is installed on a monitoring software computer of a device that requires collection. In the installation, a server address for data collection needs to be specified. After being installed, the software automatically runs in the background after the computer starts up.

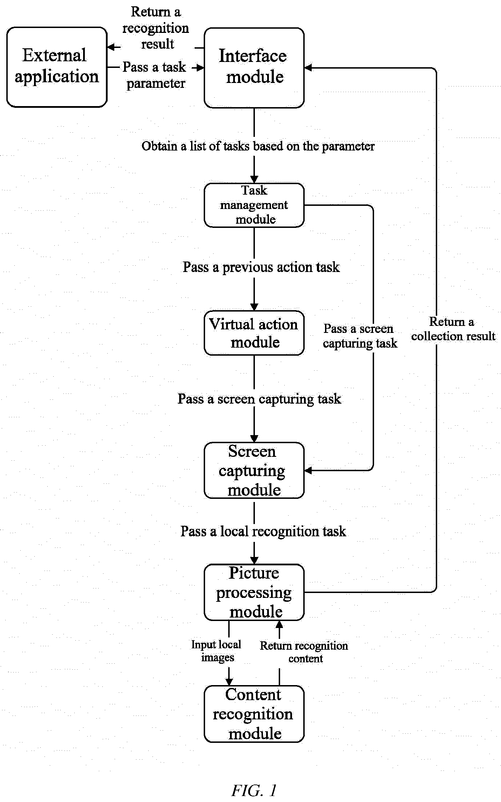

As shown in FIG. 1, the device data collection system based on image recognition comprises an interface module, a task management module, a collection strategy execution module, and a content recognition module. The collection strategy execution module further comprises a virtual action module, a screen capturing module, and an image processing module.

The interface module is located in the server, is configured to provide a standard service for an external application, and is configured to receive a task parameter delivered by the external application and return result data to the external application.

The task management module is located in the server, and is configured to: provide a user with strategies of configuring, debugging, and testing user-defined collection, and be invoked by the interface module to screen out, based on the task parameter obtained by the interface module, a list of tasks to be executed.

The collection strategy execution module performs screen capturing according to the list of tasks, to save a screenshot, locally segments and preprocesses the screenshot to obtain local images, passes the local images to the content recognition module, and transmits result data returned by the content recognition module to the interface module.

The collection strategy execution module further comprises the virtual action module, the screen capturing module, and the image processing module.

The virtual action module is located in the client and exists as a background service, is invoked by the task management module to perform a corresponding virtual previous action according to a collection strategy screened out by the task management module, and passes a screen capturing task to the screen capturing module.

The screen capturing module is located in the client and exists as a background service, is invoked by the task management module to perform screen capturing and obtain a screenshot according to the collection strategy screened out by the task management module, and passes a local recognition task and the screenshot to the image processing module.

The image processing module is located in the server, locally segments and preprocesses, according to the local recognition task passed by the screen capturing module, the screenshot to generate several local images, passes the local images and sequence labels corresponding to the local images to the content recognition module, receives the result data returned by the content recognition module, and feeds back a corresponding array formed according to a sequence of the sequence labels to the interface module.

The content recognition module preprocesses the obtained local images, obtains result data by identifying information in the local images by using an image recognition technology, and returns the result data to the collection strategy execution module.

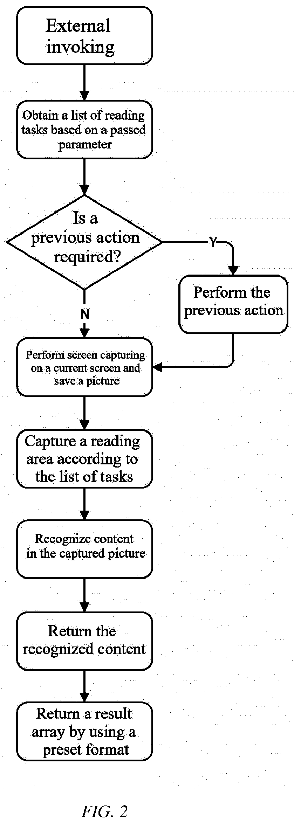

FIG. 2 is a flowchart of a device data collection method based on image recognition, and the steps of the method are as follows.

S1: an external application invokes an interface service published by an interface module.

S2: a task management module screens out, based on a task parameter obtained by an interface module, a list of tasks to be executed, and determines whether a previous action is required. Specifically, the task management module provides a user with task details, for example, definition of reading area coordinates, definition of a simulation trigger action, and an execution sequence of each task, in processes of configuration, debugging, and reading; and in addition, the task management module is invoked by the interface module, screens out, based on the task parameter obtained by the interface module, the list of all tasks executed each time, and then invokes a virtual action module and a screen capturing module to perform a previous action and a screen capturing operation, wherein after a screenshot is obtained, the screen capturing module further passes a local recognition task and the screenshot to an image processing module.

S3: the virtual action module performs the virtual previous action, and passes a screen capturing task to the screen capturing module. Specifically, when invoking an interface in an application interface, the virtual action module is invoked by the task management module to perform the corresponding virtual previous action according to a collection strategy screened out by the task management module, and passes the screen capturing task to the screen capturing module, wherein the previous action is specified by the user by using a key on a keyboard, a mouse click, a double click, a right click, and a combination thereof.

S4: the screen capturing module performs screen capturing on a current screen to save a screenshot, and passes a task and the screenshot to the image processing module. When invoking an interface in an application interface, the screen capturing module is invoked by the task management module to perform screen capturing according to the collection strategy screened out by the task management module, and passes a task and an image file back to the image processing module.

S5: the image processing module locally segments and preprocesses, based on a screenshot file corresponding to the task passed by the screen capturing module, saves local images, generates sequence labels, and passes the local images and the sequence labels to a content recognition module.

S6: the content recognition module performs recognition and calculation on the images passed by the image processing module to obtain result data, and returns the result data to the image processing module.

S7: the image processing module feeds back, to the interface module by using a preset format, the result data returned by the recognition module.

The foregoing descriptions are merely preferred embodiments of the present invention but are not intended to limit the present invention, and any modifications, improvements, and the like falling within the scope of the appended claims shall be included within the scope of protection of the present invention.

## Claims

1. A device data collection system based on image recognition, the system comprising an interface module, a task management module, a collection strategy execution module, and a content recognition module, wherein
the interface module is configured to provide a standard service for an external application, and is configured to receive a task parameter delivered by the external application and return result data to the external application;
the task management module is configured to: provide a user with strategies of configuring, debugging, and testing user-defined collection, and be invoked by the interface module to select, based on the task parameter obtained by the interface module, a list of tasks to be executed;
the collection strategy execution module is configured to: perform screen capturing according to the list of tasks, to save a screenshot, locally segment and preprocess the screenshot to obtain local images, pass the local images and sequence labels corresponding to the local images to the content recognition module, and receive result data returned by the content recognition module; the collection strategy execution module comprises a virtual action module, a screen capturing module, and an image processing module, wherein
the virtual action module is invoked by the task management module to perform a corresponding virtual previous action according to a collection strategy screened out by the task management module, and passes a screen capturing task to the screen capturing module;
the screen capturing module is invoked by the task management module to perform screen capturing and obtain a screenshot according to the collection strategy screened out by the task management module, and passes a local recognition task and the screenshot to the image processing module; and
the image processing module locally segments and preprocesses, according to the local recognition task passed by the screen capturing module, the screenshot to generate several local images, passes the local images and sequence labels corresponding to the local images to the content recognition module, receives the result data returned by the content recognition module, and feeds back a corresponding array formed according to a sequence of the sequence labels to the interface module; and
the content recognition module preprocesses the obtained local images, obtains result data by identifying information in the local images by using an image recognition technology, and returns the result data to the collection strategy execution module.

2. The device data collection system based on image recognition according to claim 1, **characterized in that** the screen capturing module and the virtual action module are located in a client and exist as background services.

3. A device data collection method based on image recognition, the method comprising the following steps:
S1: invoking, by an external application, an interface service published by an interface module;
S2: obtaining, by a task management module, a task parameter, to select a list of tasks to be executed, and determining whether a previous action is required, wherein if "yes", step S3 is performed; or if "no", step S4 is performed;
S3: performing, by a virtual action module, the virtual previous action, and passing a screen capturing task to a screen capturing module;
S4: performing, by the screen capturing module, screen capturing on a current screen to save a screenshot, and passing a task and the screenshot to an image processing module;
S5: locally segmenting and preprocessing, by the image processing module based on a screenshot file corresponding to the task passed by the screen capturing module, saving local images, generating sequence labels, and passing the local images and the sequence labels to a content recognition module;
S6: performing recognition and calculation on the images passed by the image processing module to obtain result data, and returning the result data to the image processing module,
by the content recognition module, and, forming a corresponding array according to a sequence of the sequence labels by the image processing module; and
S7: feeding back, to the interface module by the image processing module by using a preset format, the result data returned by the recognition module.

## Patentansprüche

1. Vorrichtungsdatenerfassungssystem auf der Grundlage von Bilderkennung, wobei das System ein Schnittstellenmodul, ein Aufgabenverwaltungsmodul, ein Erfassungsstrategieausführungsmodul und ein Inhaltserkennungsmodul umfasst, wobei
das Schnittstellenmodul so konfiguriert ist, dass es einen Standarddienst für eine externe Anwendung bereitstellt, und so konfiguriert ist, dass es einen von der externen Anwendung gelieferten Aufgabenparameter empfängt und Ergebnisdaten an die externe Anwendung zurückgibt;
das Aufgabenverwaltungsmodul so konfiguriert ist, dass es einem Benutzer Strategien zum Konfigurieren, Debuggen und Testen einer benutzerdefinierten Erfassung bereitstellt und von dem Schnittstellenmodul aufgerufen wird, um auf Grundlage von dem Schnittstellenmodul erhaltenen Aufgabenparameter eine Liste auszuführender Aufgaben auszuwählen;
das Erfassungsstrategieausführungsmodul für Folgendes konfiguriert ist: Durchführen einer Bildschirmaufzeichnung gemäß der Aufgabenliste, Speichern eines Screenshots, Segmentieren und Vorverarbeiten des Screenshots, um lokale Bilder zu erhalten, Weiterleiten der lokalen Bilder und Sequenzetiketten, die den lokalen Bildern entsprechen, an das Inhaltserkennungsmodul und Empfangen zurückgegebener Ergebnisdaten von dem Inhaltserkennungsmodul; das Erfassungsstrategieausführungsmodul ein virtuelles Aktionsmodul, ein Bildschirmaufzeichnungsmodul und ein Bildverarbeitungsmodul umfasst, wobei
das virtuelle Aktionsmodul von dem Aufgabenverwaltungsmodul aufgerufen wird, um eine entsprechende virtuelle vorherige Aktion gemäß einer von dem Aufgabenverwaltungsmodul herausgefilterten Erfassungsstrategie durchzuführen, und eine Bildschirmaufzeichnungsaufgabe an das Bildschirmaufzeichnungsmodul weiterleitet;
das Bildschirmaufzeichnungsmodul von dem Aufgabenverwaltungsmodul aufgerufen wird, um eine Bildschirmaufzeichnung durchzuführen und einen Screenshot gemäß der von dem Aufgabenverwaltungsmodul herausgefilterten Erfassungsstrategie zu erhalten, und eine lokale Erkennungsaufgabe und den Screenshot an das Bildverarbeitungsmodul weiterleitet; und
das Bildverarbeitungsmodul entsprechend der vom Bildschirmaufzeichnungsmodul übertragenen lokalen Erkennungsaufgabe den Screenshot lokal segmentiert und vorverarbeitet, um mehrere lokale Bilder zu erzeugen, die lokalen Bilder und Sequenzetiketten, die den lokalen Bildern entsprechen, an das Inhaltserkennungsmodul weiterleitet, die vom Inhaltserkennungsmodul zurückgegebenen Ergebnisdaten empfängt und ein entsprechendes Array, das gemäß einer Sequenz der Sequenzetiketten gebildet wurde, an das Schnittstellenmodul zurückgibt; und
das Inhaltserkennungsmodul die erhaltenen lokalen Bilder vorverarbeitet, Ergebnisdaten durch Identifizieren von Informationen in den lokalen Bildern unter Verwendung einer Bilderkennungstechnologie erhält und die Ergebnisdaten an das Erfassungsstrategieausführungsmodul zurückgibt.

2. Vorrichtungsdatenerfassungssystem auf Grundlage von Bilderkennung nach Anspruch 1, **dadurch gekennzeichnet, dass** sich das Bildschirmerfassungsmodul und das virtuelle Aktionsmodul in einem Client befinden und als Hintergrunddienste existieren.

3. Vorrichtungsdatenerfassungsverfahren auf Grundlage von Bilderkennung, wobei das Verfahren die folgenden Schritte umfasst:
S1: Aufrufen eines von einem Schnittstellenmodul veröffentlichten Schnittstellendienstes durch eine externe Anwendung;
S2: Erhalten eines Aufgabenparameters durch ein Aufgabenverwaltungsmodul, um eine Liste auszuführender Aufgaben auszuwählen, und Bestimmen, ob eine vorherige Aktion erforderlich ist, wobei bei "ja" Schritt S3 durchgeführt wird; oder bei "nein" Schritt S4 durchgeführt wird;
S3: Durchführen der virtuellen vorherigen Aktion durch ein virtuelles Aktionsmodul und Weiterleiten einer Bildschirmaufzeichnungsaufgabe an ein Bildschirmaufzeichnungsmodul;
S4: Durchführen einer Bildschirmaufzeichnung auf einem aktuellen Bildschirm durch das Bildschirmaufzeichnungsmodul, um einen Screenshot zu speichern, und Weiterleiten einer Aufgabe und des Screenshots an ein Bildverarbeitungsmodul;
S5: lokales Segmentieren und Vorverarbeiten durch das Bildverarbeitungsmodul auf Grundlage einer Screenshot-Datei, die der von dem Bildschirmaufzeichnungsmodul übertragenen Aufgabe entspricht, Speichern lokaler Bilder, Erzeugen von Sequenzetiketten und Weiterleiten der lokalen Bilder und der Sequenzetiketten an ein Inhaltserkennungsmodul;
S6: Durchführen einer Erkennung und Berechnung an den Bildern, die vom Bildverarbeitungsmodul durchgelassen werden, um Ergebnisdaten zu erhalten, und Zurücksenden der Ergebnisdaten an das Bildverarbeitungsmodul durch das Inhaltserkennungsmodul und Bilden eines entsprechenden Arrays gemäß einer Abfolge der Sequenzetiketten durch das Bildverarbeitungsmodul; und
S7: Rückspeisen der von dem Erkennungsmodul zurückgegebenen Ergebnisdaten an das Schnittstellenmodul durch das Bildverarbeitungsmodul unter Verwendung eines voreingestellten Formats.

## Revendications

1. Système de collecte de données de dispositif basé sur la reconnaissance d'image, le système comportant un module d'interface, un module de gestion de tâches, un module d'exécution de stratégie de collecte et un module de reconnaissance de contenu, dans lequel
le module d'interface est configuré pour fournir un service standard pour une application externe, et est configuré pour recevoir un paramètre de tâche délivré par l'application externe et renvoyer des données de résultat à l'application externe ;
le module de gestion de tâches est configuré pour : fournir à un utilisateur des stratégies de configuration, de débogage et de test d'une collecte définie par l'utilisateur, et être invoqué par le module d'interface pour sélectionner, sur la base du paramètre de tâche obtenu par le module d'interface, une liste de tâches à exécuter ;
le module d'exécution de stratégie de collecte est configuré pour : réaliser une capture d'écran selon la liste de tâches, enregistrer une capture d'écran, segmenter et prétraiter localement la capture d'écran pour obtenir des images locales, transmettre les images locales et les étiquettes de séquence correspondant aux images locales au module de reconnaissance de contenu, et recevoir les données de résultat renvoyées par le module de reconnaissance de contenu ; le module d'exécution de stratégie de collecte comporte un module d'action virtuelle, un module de capture d'écran et un module de traitement d'image, dans lequel
le module d'action virtuelle est invoqué par le module de gestion de tâches pour réaliser une action précédente virtuelle correspondante selon une stratégie de collecte écartée par le module de gestion de tâche, et transmet une tâche de capture d'écran au module de capture d'écran ;
le module de capture d'écran est invoqué par le module de gestion de tâches pour réaliser une capture d'écran et obtenir une capture d'écran selon la stratégie de collecte écartée par le module de gestion de tâches, et transmet une tâche de reconnaissance locale et la capture d'écran au module de traitement d'image ; et
le module de traitement d'image segmente et prétraite localement, selon la tâche de reconnaissance locale transmise par le module de capture d'écran, la capture d'écran pour générer plusieurs images locales, transmet les images locales et les étiquettes de séquence correspondant aux images locales au module de reconnaissance de contenu, reçoit les données de résultat renvoyées par le module de reconnaissance de contenu, et envoie en retour un tableau correspondant formé selon une séquence des étiquettes de séquence au module d'interface ; et
le module de reconnaissance de contenu prétraite les images locales obtenues, obtient des données de résultat en identifiant des informations dans les images locales à l'aide d'une technologie de reconnaissance d'image, et renvoie les données de résultat au module d'exécution de stratégie de collecte.

2. Système de collecte de données de dispositif basé sur la reconnaissance d'image selon la revendication 1, **caractérisé en ce que** le module de capture d'écran et le module d'action virtuel sont situés dans un client et existent en tant que services d'arrière-plan.

3. Procédé de collecte de données de dispositif basé sur la reconnaissance d'image, le procédé comportant les étapes suivantes :
S1 : l'appel, par une application externe, d'un service d'interface publié par un module d'interface ;
S2 : l'obtention, par un module de gestion de tâches, d'un paramètre de tâche, pour sélectionner une liste de tâches à exécuter, et déterminer si une action précédente est requise, dans lequel si « oui », l'étape S3 est réalisée ; ou si « non », l'étape S4 est réalisée ;
S3 : la réalisation, par un module d'action virtuel, de l'action précédente virtuelle, et la transmission d'une tâche de capture d'écran à un module de capture d'écran ;
S4 : la réalisation, par le module de capture d'écran, d'une capture d'écran sur un écran actuel pour enregistrer une capture d'écran, et la transmission d'une tâche et de la capture d'écran à un module de traitement d'image ;
S5 : la segmentation et le prétraitement locaux, par le module de traitement d'images sur la base d'un fichier de capture d'écran correspondant à la tâche transmise par le module de capture d'écran, l'enregistrement d'images locales, la génération d'étiquettes de séquence, et la transmission des images locales et des étiquettes de séquence à un module de reconnaissance de contenu ;
S6 : la réalisation d'une reconnaissance et d'un calcul sur les images transmises par le module de traitement d'images pour obtenir des données de résultat, et le renvoi des données de résultat au module de traitement d'images, par le module de reconnaissance de contenu, et la formation d'un tableau correspondant selon une séquence des étiquettes de séquence par le module de traitement d'images ; et
S7 : l'envoi en retour, au module d'interface par le module de traitement d'images en utilisant un format prédéfini, des données de résultat renvoyées par le module de reconnaissance.
